# EUROPÄISCHE PATENTSCHRIFT

(11) **EP 1 260 196 B1**
(45) Veröffentlichungstag und Bekanntmachung des Hinweises auf die Patenterteilung: **12.06.2013**
(21) Anmeldenummer: 02008014.9
(22) Anmeldetag: 10.04.2002
(51) Int. Cl.: A61C 19/00, A61C 13/15, H01L 33/00

(54) **Beleuchtungsvorrichtung**
Illumination device
Dispositif d'éclairage

(30) Priorität: 23.05.2001 DE 10125341
(43) Veröffentlichungstag der Anmeldung: 27.11.2002
(73) Patentinhaber: Ivoclar Vivadent AG, 9494 Schaan (LI)
(72) Erfinder: Plank, Wolfgang, 6830 Rankweil (AT); Rohner, Gottfried, 9450 Altstätten (CH)
(74) Vertreter: Baronetzky, Klaus

(56) Entgegenhaltungen:
- EP-A- 1 090 607
- DE-A- 4 302 897
- US-A- 5 634 711

## Beschreibung

Die Erfindung betrifft eine Beleuchtungsvorrichtung, gemäß dem Oberbegriff von Anspruch 1.

Beleuchtungsvorrichtungen werden u.a. im Dentalbereich eingesetzt, um eine Lichtpolymerisation lichthärtbarer Kunststoffe vorzunehmen. Um eine große Leuchtdichte zu erreichen, werden regelmäßig energiereiche Lichtquellen eingesetzt, wie Halogen-Glühlampen, Xenon-Blitzlampen oder gar Hochspannungs-Entladungslampen. Die letztgenannten Lampen weisen zwar eine ausgesprochen hohe Lichtstärke und damit eine entsprechend hohe Leuchtdichte auf. Jedoch beträgt die Betriebsspannung mindestens 3,5 kV, und es ist ein entsprechendes Vorschaltgerät erforderlich, so dass derartige Lampen für die Anwendung in zahnärztlichen Praxen - mindestens soweit Handgeräte betroffen sind - ungeeignet sind.

Es sind zahlreiche Versuche unternommen worden, die Leuchtdichte der bekannten Beleuchtungsvorrichtungen zu verbessern, um eine vollständige Durchhärtung auch tiefliegender Schichten rasch zu erzielen. Bislang bekannte, übliche Beleuchtungsvorrichtungen mit einer Beleuchtungsstärke von beispielsweise 50 mW/cm² führen zwar bei entsprechend langer Lichtbeaufschlagung des zu polymerisierenden Kunststoffteils zu einer guten Oberflächenhärte. Tiefer liegende Schichten werden jedoch nicht oder nur unvollständig durchgehärtet. Es entsteht ein Härtegradient, der dazu führt, dass tieferliegende, mittlere Bereiche noch eher weich verbleiben oder später durchhärten als Oberflächenbereiche.

Die bekannten Beleuchtungsvorrichtungen führen zu Restaurationsergebnissen, die teilweise mit Randspaltenproblemen behaftet sind. Die bekannten lichthärtenden Kunststoffe schrumpfen leicht während des Härtens. Mit den bekannten Beleuchtungsvorrichtungen entsteht die Durchhärtung zunächst im oberen/äußeren Bereich des Restaurats. Die nachfolgende Durchhärtung der tieferliegenden, zentralen Bereiche führt zur Kontraktion und damit zur Randspaltenbildung.
Es sind zahlreiche Versuche unternommen worden, die Leuchtdichte der bekannten Beleuchtungsvorrichtungen zu verbessern, um eine vollständige Durchhärtung auch tiefliegender Schichten rasch zu erzielen. Bislang bekannte, übliche Beleuchtungsvorrichtungen mit einer Beleuchtungsstärke von beispielsweise 50 mW/cm² führen zwar bei entsprechend langer Lichtbeaufschlagung des zu polymerisierenden Kunststoffteils zu einer guten Oberflächenhärte. Tiefer liegende Schichten werden jedoch nicht oder nur unvollständig durchgehärtet. Es entsteht ein Härtegradient, der dazu führt, dass tieferliegende, mittlere Bereiche noch eher weich verbleiben oder später durchhärten als Oberflächenbereiche.

Die bekannten Beleuchtungsvorrichtungen führen zu Restaurationsergebnissen, die teilweise mit Randspaltenproblemen behaftet sind. Die bekannten lichthärtenden Kunststoffe schrumpfen leicht während des Härtens. Mit den bekannten Beleuchtungsvorrichtungen entsteht die Durchhärtung zunächst im oberen/äußeren Bereich des Restaurats. Die nachfolgende Durchhärtung der tieferliegenden, zentralen Bereiche führt zur Kontraktion und damit zur Randspaltenbildung.
Es sind zahlreiche Versuche unternommen worden, die Leuchtdichte der bekannten Beleuchtungsvorrichtungen zu verbessern, um eine vollständige Durchhärtung auch tiefliegender Schichten rasch zu erzielen. Bislang bekannte, übliche Beleuchtungsvorrichtungen mit einer Beleuchtungsstärke von beispielsweise 50 mW/cm² führen zwar bei entsprechend langer Lichtbeaufschlagung des zu polymerisierenden Kunststoffteils zu einer guten Oberflächenhärte. Tiefer liegende Schichten werden jedoch nicht oder nur unvollständig durchgehärtet. Es entsteht ein Härtegradient, der dazu führt, dass tieferliegende, mittlere Bereiche noch eher weich verbleiben oder später durchhärten als Oberflächenbereiche.

Die bekannten Beleuchtungsvorrichtungen führen zu Restaurationsergebnissen, die teilweise mit Randspaltenproblemen behaftet sind. Die bekannten lichthärtenden Kunststoffe schrumpfen leicht w?hrend des Härtens. Mit den bekannten Beleuchtungsvorrichtungen entsteht die Durchhärtung zunächst im oberen/äusseren Bereich des Restaurats. Die nachfolgende Durchh?rtung der tieferliegenden, zentralen Bereiche führt zur Kontraktion und damit zur Randspaltenbildung.

EP 1 090 607 A1, worauf die zweiteilige Form des Anspruchs 1 basiert, zeigt ein dentales Handgerät zur Polymerisation von lichtaushärtenden Werkstoffen oder Kunstharzen. Das Handgerät enthält eine Lichtquelle in der eine Vielzahl von kreisrunden Gehäusen zur Aufnahme von lichtemittierenden Schaltungen angeordnet sind. Das Gehäuse ist in einem Substrat eingelassen, das aus reflektierenden Metall besteht.

DE 43 02 897 A1 zeigt ein Substrat mit einem Array lichtemittierender Elemente, wie es in einem Bildsensor oder in einer Hintergrundbeleuchtung eines LCDs eingesetzt wird. In derartigen Aufbauten ist eine gleichförmige Lichtverteilung über das Array der lichtemittierenden Elemente notwendig. Es wird daher vorgeschlagen, an schwach beleuchteten Teile im Array licht-reflektierende Teile einzubauen, so dass die schwach beleuchteten Teile durch benachbarte Leuchtelemente in ihrer Leuchtkraft unterstützt werden können. Damit wird eine konstante Beleuchtung über dem gesamten Array lichtemittierender Elemente erreicht.

US 5,634,711 zeigt ein tragbares Leuchtgerät zur industriellen Materialhärtung mit Licht in medizinischen Anwendungen. Es ist Aufgabe die Strahlungsintensität während des Betriebs des Leuchtgerätes so konstant wie möglich zu halten. Dazu wird einerseits ein Leuchtgerät mit einem LED-Array auf einem Substrat vorgeschlagen, wobei das Substrat mit einer Wärmesenke gekühlt wird. Ferner enthält das Leuchtgerät eine Regelung, welche die Leuchtkraft des LED-Arrays erfasst und die elektrische Eingangsleistung zum LED-Array basierend auf der Leuchtkraft einstellt.

Daher liegt der Erfindung die Aufgabe zugrunde, eine Beleuchtungsvorrichtung für Dentalzwecke gemäß dem Oberbegriff von Anspruch 1 zu schaffen, die technisch zuverlässiger ist.

Diese Aufgabe wird erfindungsgemäß durch Anspruch 1 gelöst. Vorteilhafte Weiterbildungen ergeben sich aus den Unteransprüchen.

Die erfindungsgemäße Beleuchtungsvorrichtung bietet zunächst eine besonders hohe Leuchtdichte. Durch die kompakte Aneinanderreihung zahlreicher Lichtquellen auf Halbleiterbasis, wie Laserdioden oder LED-Chips, entsteht eine besonders hohe Intensität der Lichtabgabe. Erfindungsgemäß lässt sich die lichthärtbare Masse praktisch in einem Zug mit hoher Energie nahezu schlagartig durchhärten. Dadurch ist der H?rtegradient mindestens deutlich geringer, und es ergibt sich nicht die starke zeitliche Verzögerung zwischen dem Durchhärten der Oberflächen-/Randbereiche und dem Durchhärten der tieferliegenden Mittenbereiche der lichthärtbaren Masse. Die Randbereiche sind dadurch nicht vorgehärtet, wenn der Mittenbereich aushärtet, so dass die Schrumpfkräfte sich nicht auf die Randbereiche konzentrieren, sondern gleichmäßig verteilt sind. Die Neigung zur Randspaltenablösung ist dadurch erfindungsgemäß deutlich reduziert.

Mit der erfindungsgemäßen Lösung lässt sich preisgünstig eine Beleuchtungsvorrichtung hoher Lichtabgabeintensität bereitstellen. Durch die Reflexionsschichten um die Lichtquellen herum lässt sich die Lichtabgabe überraschend wesentlich verbessern, auch wenn sie nach vorne erfolgt.

Zwar ist das Vorsehen von Reflektoren für die Verbesserung der Abstrahlcharakteristik von Lichtquellen an sich und längst bekannt; beispielsweise weisen viele Halogen-Glühlampen einen integrierten Reflektor auf. Überraschend lässt sich mit der erfindungsgemäßen Reflexionsschicht die Lichtabgabe auch dann verbessern, wenn die Reflexionsschicht gegenüber der Lichtabgabeoberfläche des LED-Chips zurückspringt. Hierbei wird kurzerhand die Tatsache ausgenutzt, dass durch die hohe Lichtintensität stets entweder an den Behandlungsoberflächen Strahlung reflektiert wird, die dann erneut auf die Beleuchtungsvorrichtung trifft und dort beispielsweise im Bereich der metallischen Reflexionsschicht reflektiert wird. Besonders günstig ist diese Lösung aber auch bei der Realisierung eines Hand-Lichthärtgeräts, das meist einen sogenannten Gegenkonus aufweist, der dem konusförmigen Reflektor der Halogen-Glühbirne gegenüberliegt. Dort wird auftreffendes Licht reflektiert und im wesentlichen zu den Lichtquellen zurückgeworfen, so dass sie dort an den metallischen Reflexionsschichten reflektiert werden können und den Wirkungsgrad der Lichtquellen erhöhen.

Die erfindungsgemäße Lösung der direkten Aufbringung von LED-Chips auf einer metallischen Schicht erlaubt auch eine ausgesprochen gute Wärmeableitung, nachdem das Metall ein hervorragender Wärmeleiter ist. Die entstehende Verlustwärme lässt sich daher gut abführen.

Beliebige geeignete Metalle kommen hier in Frage. Hierzu gehören Silber, Titan, Platin und Aluminium.

In besonders vorteilhafter Ausgestaltung lassen sich auch Teile der Reflexionsschicht als Anschlussleitungen einsetzen. Hierzu ist die Reflexionsschicht auf einer elektrisch isolierenden Schicht, wie beispielsweise einer Siliciumdioxidschicht, aufgebracht und die Bereiche sind in an sich bekannter Weise durch entsprechende Streifen ohne Reflexionsschicht voneinander elektrisch isoliert. Die metallische Reflexionsschicht eignet sich auch gut für das Aufbonden zur Verbindung der LED-Chips mit den Anschlussleitungen über Bonddrähte.

In einer besonders günstigen Ausgestaltung ist es vorgesehen, dass die Reflexionsschichten sich von den LED-Chips aus betrachtet schräg nach vorne erstrecken und einen Mikroreflektor je jeden Chip umgebend bilden. Diese Mikroreflektoren verbessern die Fokussierung der von den Lichtquellen emittierten Lichtstrahlen, wobei benachbarte Reflektor-Seitenwände sich praktisch unmittelbar aneinander anschließen können, so dass sie Trennwände zwischen den LED-Chips bilden.

Bevorzugt sind eine Mehrzahl von LED-Chips in Reihe geschaltet. Bei einer derartigen Lösung können sich dann die Bonddrähte kurzerhand über die Trennwände hinwegerstrecken. Bei dieser Lösung lässt sich eine Vielzahl von LED-Chips pro Flächeneinheit in hoher Dichte unterbringen und verdrahten.

In einer weiter modifizierten Ausgestaltung ist es vorgesehen, die zwischen den LED-Chips liegenden metallischen Reflexionsbereiche wesentlich kleiner zu halten als die LED-Chips selbst. Als Reflexionsbereich dient hier dann zum einen der LED-Chip mit seiner ebenfalls metallischen Oberfläche und zum anderen der die Mehrfachanordnung der Chips umgebende Bereich, der dann eine beliebig große Fläche aufweisen kann. Diese Lösung hat den Vorteil, dass die Fokussierung aufgrund der engen Anordnung der Chips zueinander besser ist. Jedoch ist auch bei der Ausgestaltung mit versenkten LED-Chips aufgrund der rechteckigen Ausgestaltung der Trennwände die Packungsdichte ausgesprochen hoch, wenn rechteckige Chips verwendet werden. Der Flächenanteil der LED-Chips an der Fläche, die von der Mehrfachanordnung überdeckt wird, kann beispielsweise 60 % oder aber bei einer flachen Reflexionsschicht sogar 90 % betragen, wobei je die die Mehrfachanordnung umgebende Fläche nicht mitgerechnet ist.

Besonders günstig ist es, wenn die LED-Chips in ihrer Mehrfachanordnung hier unmittelbar benachbart der zu durchhärtenden Masse angeordnet werden können, um die Härtung vorzunehmen. Bei dieser Lösung entsteht erstmals die Möglichkeit, gezielt mit einer bestimmten LED-Lichtquelle einen bestimmten Bereich des Restaurationsteils zu beaufschlagen. Diese Lösung erlaubt es beispielsweise, zunächst den mittleren und regelmäßig tieferen Bereich des Restaurationsteils intensiver mit Licht zu beaufschlagen. Die Härtung erfolgt dann praktisch so, dass der zentrale Bereich durchhärtet. Ein Schrumpfen an dieser Stelle ist aber für die Randspaltenbildung unkritisch, nachdem zu diesem Zeitpunkt die Randbereiche nicht durchgehärtet sind. Dies stellt einen ganz besonderen Fortschritt gegenüber der bislang üblichen gleichmäßigen Härtung dar, wobei die Randspaltenbildung drastisch reduziert oder gar ganz vermieden ist.

Gemäß einer weiteren, besonders günstigen Ausgestaltung ist es vorgesehen, die Mehrzahl der LED-Chips so kompakt und auf kleinen Abmessungen zusammengefasst vorzusehen, dass zumindest bei größeren - und insofern besonders kritischen - Restaurationsteilen die Lichtemission sich auf den zentralen Bereich richtet. Das zu polymerisierende Material hat lichtverteilende Eigenschaften, so dass bei Beaufschlagung des zentralen Bereichs auch die Randbereiche mit reduzierter Intensität mitbeaufschlagt werden. Auch diese Art des Einsatzes der erfindungsgemäßen Beleuchtungsvorrichtung ermöglicht mindestens eine Verminderung der Neigung zur Randspaltung.

Weitere Einzelheiten, Vorteile und Merkmale ergeben sich aus der nachfolgenden Beschreibung eines Ausführungsbeispiels anhand der Zeichnung.

Es zeigen:
- Fig. 1: einen teilweise schematisierten Schnitt durch eine Mehrfachanordnung von LED-Chips für eine Ausführungsform einer erfindungsgemäßen Beleuchtungsvorrichtung, wobei die Schichtstärke teilweise überhöht ist;
- Fig. 2: eine weitere Ausführungsform einer erfindungsgemäßen Beleuchtungsvorrichtung, wobei die Schichtstärke teilweise überhöht ist;
- Fig. 3: eine Ansicht einer weiteren Ausführungsform einer erfindungsgemäßen Beleuchtungsvorrichtung, unter Darstellung der Mehrfachanordnung der LED-Chips, in schematischer perspektivischer Darstellung;
- Fig. 4: die Ausführungsform gemäß Fig. 3 nach Aufbringung auf einen Grundkörper;
- Fig. 5: eine perspektivische Darstellung einer weiteren Ausführungsform einer erfindungsgemäßen Beleuchtungsvorrichtung, wobei die LED-Chips in den Mikroreflektoren versenkt sind;
- Fig. 6: eine weitere Ausführungsform einer erfindungsgemäßen Beleuchtungsvorrichtung, wobei die LED-Chips auf den Mikroreflektoren aufgebracht sind;
- Fig. 7: eine Darstellung einer weiteren Ausführungsform einer erfindungsgemäßen Beleuchtungsvorrichtung, die für den Einbau in ein Hand-Lichthärtgerät bestimmt ist; und
- Fig. 8: eine perspektivische Darstellung einer weiteren Ausführungsform einer erfindungsgemäßen Beleuchtungsvorrichtung in der Ausgestaltung zum Aushärten von orthodontischen Versorgungen.

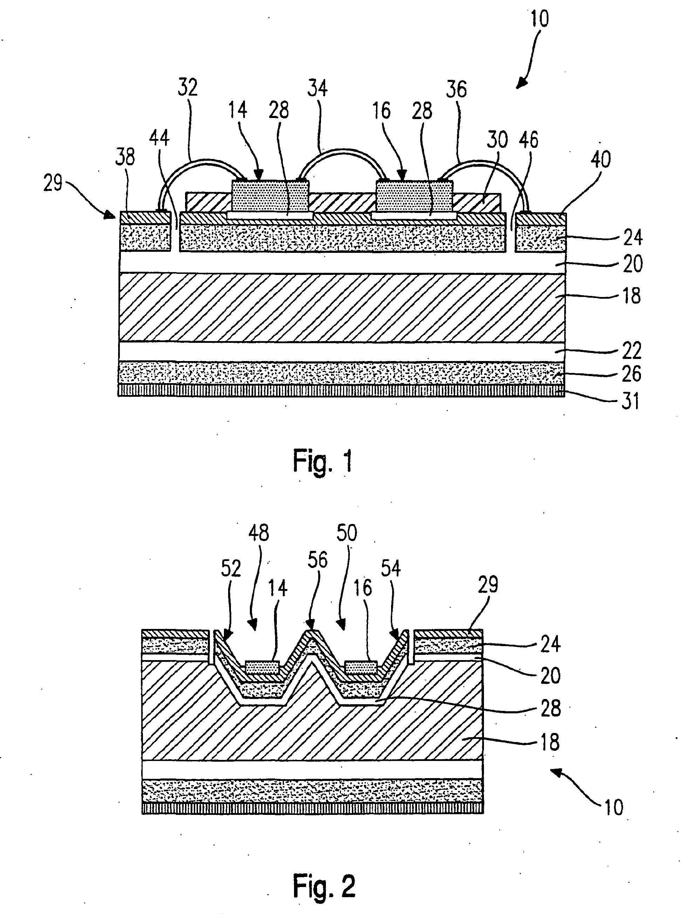

Aus Fig. 1 ist ein wesentlicher Teil einer erfindungsgemäßen Beleuchtungsvorrichtung 10 in einer Ausführungsform ersichtlich. Die Beleuchtungsvorrichtung umfasst bei dieser schematischen Darstellung zwei Lichtquellen 14 und 16. Die Lichtquellen 14 und 16 sind als LED-Chips ausgebildet und weisen eine Fläche von 1mm x 1mm und eine Stärke von 100 Mikrometern auf, die in Fig. 1 dementsprechend stark übertrieben dargestellt ist, was der Deutlichkeit der Darstellung dienen soll.

Die Lichtquellen 14 und 16 sind auf einem Substrat 18 aufgebracht, das in dem dargestellten Ausführungsbeispiel ein Siliciumwafer ist. Die Schichtstärke des Wafers beträgt 500 Mikrometer, so dass auch insofern die Darstellung gemäß Fig. 1 eine übertriebene Stärke zeigt. Ein derartiger Wafer kann in an sich bekannter Weise als Scheibe mit einem Durchmesser von beispielsweise 10cm gefertigt werden, und in einem integrierten Produktionsprozess können zahlreiche Beleuchtungsvorrichtungen nebeneinander in großer Stückzahl kosteneffizient hergestellt werden. Beispielsweise können sechs Lichtquellen 14, 16 eine Beleuchtungsvorrichtung 10 bilden, wobei zwei Lichtquellen nebeneinander in einer Richtung und je drei Lichtquellen nebeneinander in der anderen Richtung angeordnet sein können. Jede Beleuchtungsvorrichtung kann dann eine Fläche von lediglich 4,3 mm x 6 mm einnehmen, so dass auf einem Wafer 250 Beleuchtungsvorrichtungen in einem Zuge hergestellt werden können.

Nachfolgend wird der bevorzugte Schichtaufbau für die Herstellung der erfindungsgemäßen Beleuchtungsvorrichtung beschrieben. Auf dem elektrisch leitenden Wafer aus Silicium wird beidseitig je eine isolierende Schicht 20 und 22 aus Siliciumdioxid aufgebracht. Die Stärke beträgt hier je etwa 1 Mikrometer. Auf dieser Schicht wird eine Diffusionssperrschicht 24, 26 aufgebracht, die eine Stärke von je 2 Mikrometern einnehmen kann und beispielsweise aus Wolfram-Titan bestehen kann.

Auf die Diffusionssperrschicht 26 wird dann eine Kupferschicht in einer Stärke von 2 Mikrometern aufgesputtert. Demgegenüber wird auf die Diffusionssperrschicht 24 eine Silberschicht 29 in einer Stärke von ebenfalls 2 Mikrometern aufgesputtert. Durch die Diffusionssperrschichten ist verhindert, dass Silber- oder Kupferbestandteile das metallische Siliciumsubstrat verunreinigen und die betreffenden Schichten Auflösungserscheinungen zeigen.

Auf die Silberschicht 29 wird an den Stellen, an denen der LED-Chip 14 bzw. 16 aufgebracht werden soll, je ein Silberlot 28 in einer Stärke von 10 Mikrometern aufgebracht, und der Chip wird aufgelötet.

Die in Fig. 1 dargestellte Kunststoffmaske 30 erstreckt sich zwischen den LED-Chips 14 und 16 diese begrenzend und legt die Anordnung fest. Es versteht sich, dass sie entnommen werden kann, sobald eine feste Verbindung besteht.

Für die Bereitstellung der elektrischen Anschlüsse ist es vorgesehen, dass Bonddrähte 32, 34 und 36 sich zwischen Anschlussfeldern auf den Chips und Bereichen 38 und 40 der Schicht 29 erstrecken. Die Schicht 29 bildet damit sowohl eine metallische Reflexionsschicht mit ausgesprochen guten Reflexionseigenschaften, nachdem dort Silber verwendet wird, als auch elektrische Anschlussleitungen für die Lichtquellen 14 und 16.

Zur elektrischen Isolierung der verschiedenen Bereiche der Reflexionsschicht 29 dient das Einbringen von Sägeschnitten. In dem dargestellten Ausführungsbeispiel sind zwei Sägeschnitte 44, 46 dargestellt, wobei es sich versteht, dass an beliebigen geeigneten Stellen, beispielsweise auch zwischen den Lichtquellen 14 und 16, entsprechende Schnitte vorgesehen sein können, um die erwünschte elektrische Isolierung bereitzustellen. Der Sägeschnitt ist so tief geführt, dass mindestens die elektrisch leitfähige Reflexionsschicht 29 eindeutig durchtrennt ist. Bevorzugt endet er in an sich bekannter Weise oberhalb des Siliciumwafers 18. In ebenfalls an sich bekannter Weise kann der je durch den Sägeschnitt erzeugte Spalt mit einer geeigneten elektrisch isolierenden Masse verfüllt werden.

Der Reflexionsschicht 29 gegenüberliegend ist eine Kupferschicht 31 vorgesehen, wie es aus Fig. 1 ersichtlich ist.

Aus Fig. 2 ist eine modifizierte Ausgestaltung einer erfindungsgemäßen Beleuchtungsvorrichtung 10 ersichtlich. Dort sind die Lichtquellen 14 und 16 versenkt angeordnet. Gleiche Bezugszeichen weisen hier auf gleiche oder entsprechende Teile hin. Das Substrat 18 weist Vertiefungen auf, die von schrägen Wänden begrenzt sind. Derartige Vertiefungen lassen sich beispielsweise durch Ätzen erzeugen. Über die Vertiefungen oder Mikroreflektoren 48, 50 hinweg erstrecken sich die Schichten gemäß Fig. 1, also die Siliciumdioxidschicht 20, die Diffusionssperrschicht 24 und die Reflexionsschicht 29. Auf der Reflexionsschicht 29 bzw. teilweise dort versenkt ist der LED-Chip 14 und 16 je auf einer Silberlotschicht 28 aufgebracht. Seitlich erstrecken sich je Wände 52, 54 und bilden je einen Teil eines Mikroreflektors für jeden LED-Chip 14 und 16.

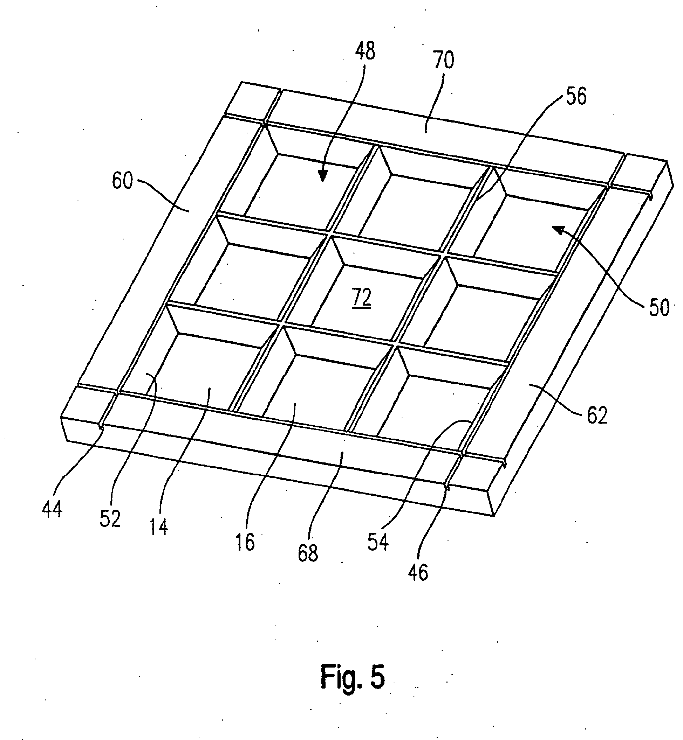

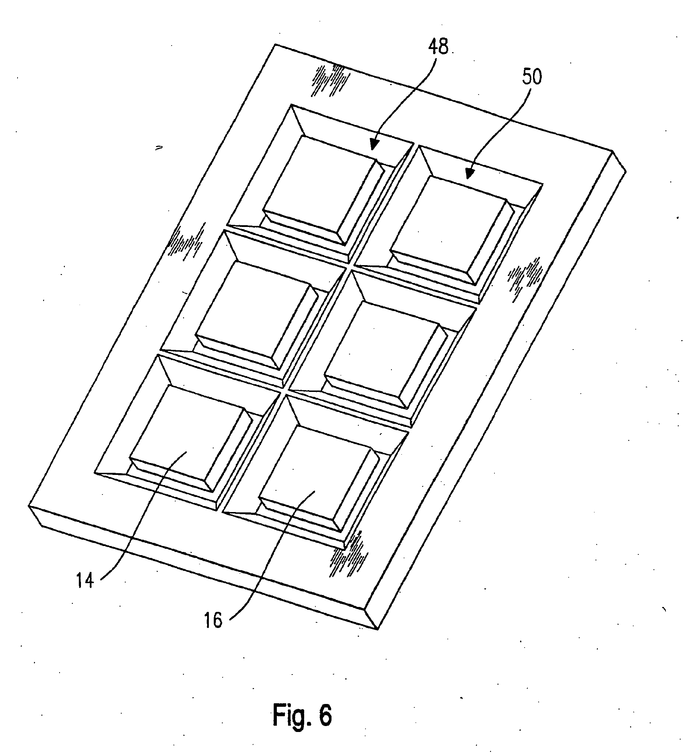

Zwischen den LED-Chips 14 und 16 erstreckt sich eine Trennwand 56, die sich ebenfalls je schräg erstreckt und zur Vorderseite hin spitz zuläuft. Diese Lösung führt zu der aus Fig. 5 und 6 ersichtlichen Gitterstruktur.

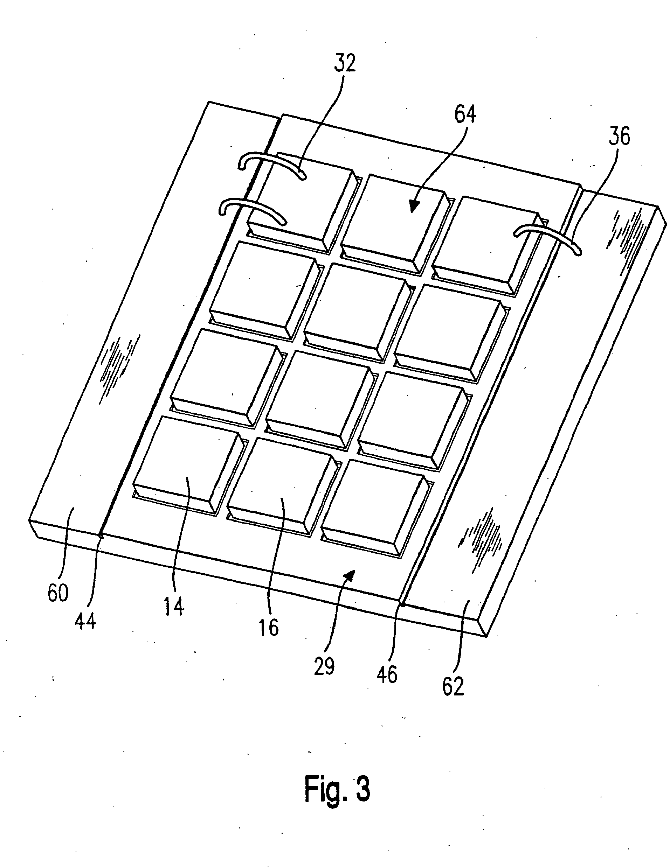

Aus Fig. 3 ist ersichtlich, in welcher Weise die LED-Chips 14, 16 hochkompakt nebeneinander angebracht sein können. Bei dieser Ausgestaltung einer erfindungsgemäßen Beleuchtungsvorrichtung sind insgesamt 12 LED-Lichtquellen 14, 16 im Raster angebracht. Je 3 Lichtquellen sind über die Bonddrähte, von denen Bonddrähte 32 und 36 schematisch angedeutet sind, in Serie geschaltet, und je 4 dieser Serienschaltungen sind parallel geschaltet. Damit ergibt sich eine recht einfache Stromversorgung über die beiden Anschlussleitungen 60, 62.

Bei der Ausführungsform gemäß Fig. 3 erstreckt sich die Reflexionsschicht 29 recht breit außerhalb der Mehrfachanordnung 64 der Lichtquellen 14, 16. Zwischen den Lichtquellen steht jedoch recht wenig Platz zur Verfügung. Auch diese Bereiche sind jedoch verspiegelt und mit einer Silberschicht bedeckt, so dass sie ebenfalls der Erhöhung des Lichtwirkungsgrads dienen.

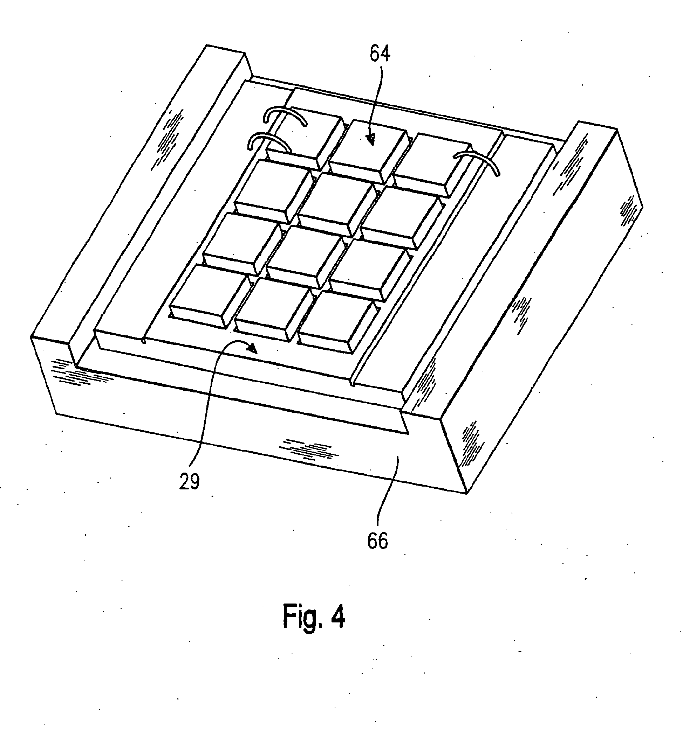

Aus Fig. 4 ist ersichtlich, in welcher Weise die Mehrfachanordnung 64 aufgebracht sein kann. Es ist ein Grundkörper 66 vorgesehen, der die Mehrfachanordnung 64 von Lichtquellen abstützt. Durch die Kupferschicht 31 (vgl. Fig. 1) ist der Wärmeübergangswiderstand ausgesprochen gering, und die Wärmeableitung kann großflächig erfolgen.

Aus Fig. 5 ist ersichtlich, dass die Trennwände 56 V-förmig spitz zulaufend ausgebildet sind und bei dieser Ausführungsform ein Raster für die Aufnahme von neun LED-Chips 14, 16 bilden. Diese Lösung bietet neben den Anschlussleitungen 60 und 62 zwei weitere Anschlussleitungen 68, 70 in der anderen horizontalen Richtung. Die Bonddrähte für die zentrale Lichtquelle 72 sind zu den Anschlussleitungen 68 und 70 geführt, so dass bei dieser Lösung eine separate Steuerung der zentralen Lichtquelle 72 und der übrigen Lichtquellen 14, 16 möglich ist. Dies ermöglicht die Ansteuerung gemäß Anspruch 15.

Aus Fig. 6 ist ersichtlich, dass die LED-Chips in den Mikroreflektoren 48 und 50 nicht nur versenkt aufgenommen sein können, sondern auch dort erhaben angeordnet sein können. Bevorzugt ist jedoch das Vorsprungmaß gegenüber dem Grund des Mikroreflektors geringer als die Höhe des Mikroreflektors.

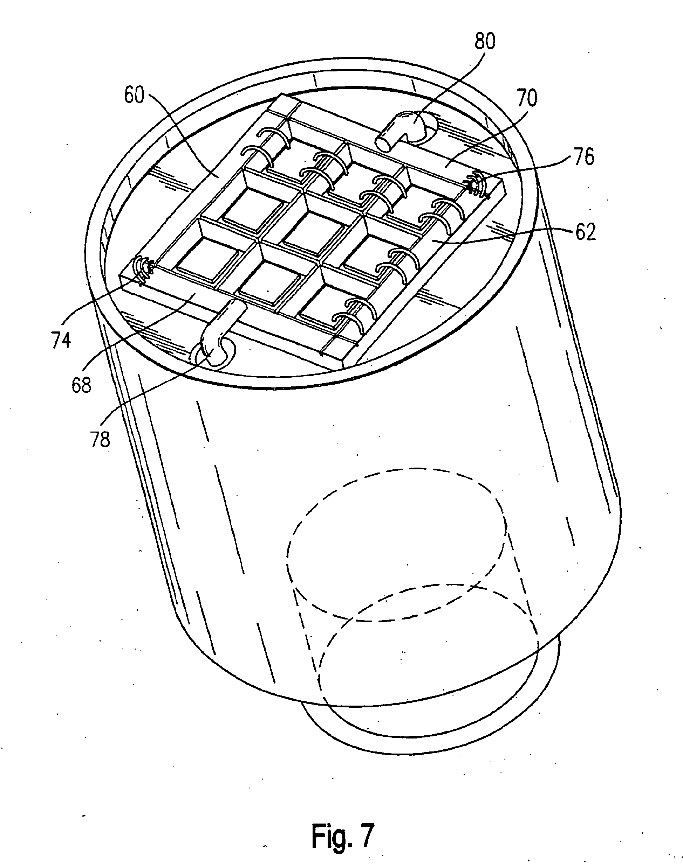

Aus Fig. 7 ist eine weitere Ausführungsform einer erfindungsgemäßen Beleuchtungsvorrichtung ersichtlich. Diese Ausführungsform entspricht im wesentlichen der Ausführungsform gemäß Fig. 5, wobei jedoch keine separate Steuerung der zentralen Lichtquelle 72 vorgesehen ist. Vielmehr sind bei dieser Lösung die Anschlussleitungen 62 und 70 einerseits und die Anschlussleitungen 60 und 68 andererseits je über Bonddrähte 74, 76, die auch mehrfach ausgebildet sein können, miteinander verbunden. Auf die Anschlussleitung 68 ist ein Anschlussdraht 78 aufgelötet, und auf die Anschlussleitung 70 ein Anschlussdraht 80. Der Durchmesser des dort je vorgesehenen Kupferdrahts ist so bemessen, dass die elektrischen Verluste gering sind.

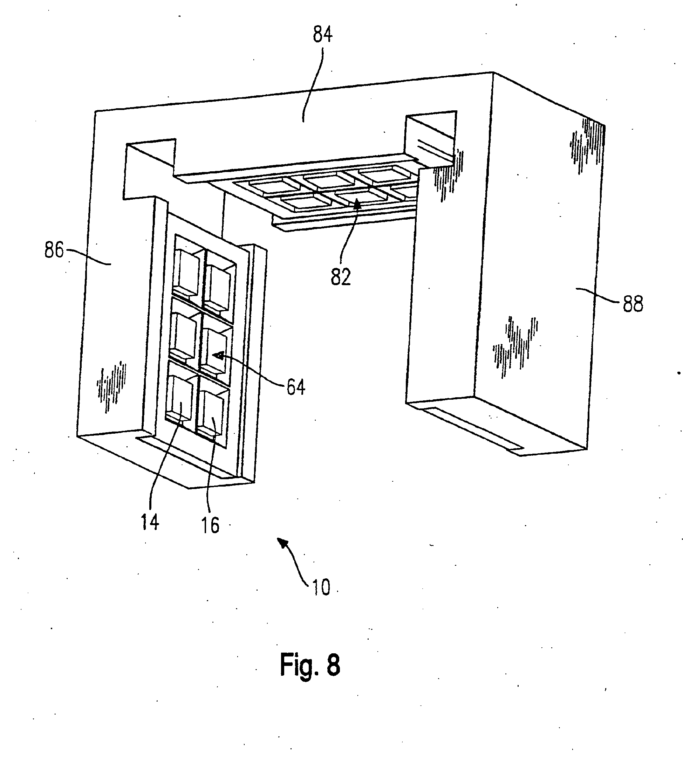

Aus Fig. 8 ist eine letzte Ausführungsform einer erfindungsgemäßen Beleuchtungsvorrichtung in beispielhafter Form ersichtlich. Dort sind mehrere Mehrfachanordnungen 64, 82 im Winkel zueinander angebracht. Die Beleuchtungsvorrichtung 10 weist insgesamt die Form eines umgekehrten U auf und ist an ihrem Mittelschenkel 84 und ihren beiden Seitenschenkeln 86 und 88 je innen mit einer Mehrfachanordnung 64, 82 von Lichtquellen versehen.

Der Innenabstand zwischen den Seitenschenkeln 86 und 88 ist so bemessen, dass ein Backenzahn dazwischen passt. Diese Lösung ermöglicht es, die erfindungsgemäße Beleuchtungsvorrichtung 10 gemäß dieser Ausführungsform als eine Art Lichtspange über den Zahn zu legen, an welchem die Aushärtung vorgenommen werden soll. Durch die Lichtbeaufschlagung aus drei Richtungen ist eine genaue Überprüfung, an welcher Stelle die Lichthärtung vorgenommen werden muss, entbehrlich, so dass diese Lösung besonders bedienungssicher ist.

Diese Ausführungsform ist besonders für orthodontische Versorgungen geeignet.

## Patentansprüche

1. Beleuchtungsvorrichtung für Dentalzwecke, mit
- einem Substrat (18) und
- einer auf dem Substrat (18) aufgebrachten metallischen Reflexionsschicht (29),
- wobei auf der metallischen Reflexionsschicht (29) eine Mehrzahl von Lichtquellen (14, 16) auf Halbleiterbasis aufgebracht sind, die von einer reflektierenden Oberfläche auf der metallischen Reflexionsschicht umgeben sind,
**gekennzeichnet durch**
- mindestens zwei Sägeschnitte (44, 46), die die metallische Reflexionsschicht (29) elektrisch in mindestens drei verschiedene Bereiche (398, 40) unterteilen, wobei
-- eine erste (14) der Lichtquellen (14, 16) elektrisch mit einem ersten Bereich (38) der metallischen Reflexionsschicht (29) verbunden ist,
-- eine zweite (16) der Lichtquellen (14, 16) elektrisch mit einem letzten Bereich (40) der metallischen Reflexionsschicht (29) verbunden ist,
-- die Lichtquellen (14, 16) in mindestens einem Bereich der metallischen Reflexionsschicht (29) zwischen dem ersten Bereich (38) und letzten Bereich (40) angeordnet sind, und
-- die Lichtquellen (14, 16) untereinander elektrisch seriell verbunden sind.

2. Beleuchtungsvorrichtung nach Anspruch 1, **dadurch gekennzeichnet, dass** die reflektierende Oberfläche durch eine Reflexionsschicht gebildet ist, die auf dem Substrat aufgebracht ist.

3. Beleuchtungsvorrichtung nach Anspruch 2, **dadurch gekennzeichnet, dass** eine metallische Reflexionsschicht (29) auf dem Substrat (18) aufgebracht sind.

4. Beleuchtungsvorrichtung nach einem der vorhergehenden Ansprüche, **dadurch gekennzeichnet, dass** die reflektierende Oberfläche (29) einen Reflexionsgrad von mehr als 50%, insbesondere mehr als 60%, aufweist.

5. Beleuchtungsvorrichtung nach einem der vorhergehenden Ansprüche, **dadurch gekennzeichnet, dass** die reflektierende Oberfläche (29) aus Aluminium, Silber, Paladium, Platin, Silicium und/oder Keramik besteht.

6. Beleuchtungsvorrichtung nach einem der vorhergehenden Ansprüche, **dadurch gekennzeichnet, dass** das Substrat (18) die reflektierende Oberfläche (29) aufweist.

7. Beleuchtungsvorrichtung nach einem der vorhergehenden Ansprüche, **dadurch gekennzeichnet, dass** die Lichtquellen (14, 16, 72) je von Reflexionsbereichen (38, 40) umgeben sind, die durch die Reflexionsschicht (29) gebildet sind, und dass die Reflexionsbereiche (38, 40) aneinander angrenzen.

8. Beleuchtungsvorrichtung nach einem der vorhergehenden Ansprüche, **dadurch gekennzeichnet, dass** LED-Chips (14, 16) auf dem Substrat (18) in der Fertigungsabfolge nach bzw. auf der metallischen Reflexionsschicht (29) aufgebracht sind.

9. Beleuchtungsvorrichtung nach einem der vorhergehenden Ansprüche, **dadurch gekennzeichnet, dass** zwischen den LED-Chips (14, 16) und Bereichen der Reflexionsschicht (29) Bonddrähte (32, 34, 36, 74, 76) angebracht sind, und die Bereiche der Reflexionsschicht (29) als Anschlussleitungen (60, 62, 68, 70) für die Stromversorgung der LED-Chips (14, 16) verdrahtet sind.

10. Beleuchtungsvorrichtung nach einem der vorhergehenden Anspruche, **dadurch gekennzeichnet, dass** LED-Chips (14, 16) nebeneinander und übereinander im Raster angeordnet sind und Drähte (32, 34, 36, 74, 76) für die LED-Chips (14, 16) als Lichtquellen (14, 16) sich mindestens teilweise zwischen den Chips erstrecken, und dass die Drähte insbesondere aufgebondet sind.

11. Beleuchtungsvorrichtung nach einem der vorhergehenden Ansprüche, **dadurch gekennzeichnet, dass** die metallische Reflexionsschicht (29) als metallische Schicht ausgebildet ist und dass das Substrat (18) ein Siliciumwafer ist, und dass eine Diffusionssperrschicht (24, 26) den Siliciumwafer von der metallischen Schicht trennt.

12. Beleuchtungsvorrichtung nach Anspruch 7, **dadurch gekennzeichnet, dass** auf dem Siliciumwafer eine Siliciumoxidschicht aufgebracht ist, auf der sich die Diffusionsperrschicht (24, 26) erstreckt.

13. Beleuchtungsvorrichtung nach einem der vorhergehenden Ansprüche, **dadurch gekennzeichnet, dass** die Lichtquellen (14, 16) als LED-Chips (14, 16) ausgebildet sind und auf dem Substrat (18) versenkt aufgebracht sind und dass die Reflexionsbereiche sich von den LED-Chips (14, 16) betrachtet schräg nach vorne erstrecken.

14. Beleuchtungsvorrichtung nach einem der vorhergehenden Ansprüche, **dadurch gekennzeichnet, dass** die Reflexionsbereiche sich unmittelbar angrenzend an die LED-Chips (14, 16) schräg nach vorne erstrecken, insbesondere im Winkel von etwa 56°, und dass die LED-Chips (14, 16) mit den umgebenden Reflexionsbereichen in dichtester Packung angeordnet sind.

15. Beleuchtungsvorrichtung nach einem der vorhergehenden Ansprüche, **dadurch gekennzeichnet, dass** die Beleuchtungsvorrichtung (10) in einem Lichthärtgerät als Lichtquelleneinheit eingesetzt ist und die emittierte Lichtstrahlung, insbesondere über einen prismatischen Körper, einem Lichtleitstab zuleitbar ist.

16. Beleuchtungsvorrichtung nach einem der vorhergehenden Ansprüche, **dadurch gekennzeichnet, dass** die Beleuchtungsvorrichtung (10) an der Spitze eines zahnärztlichen Instruments angebracht ist und für die Lichtpolymerisation eines lichtpolymerisierbaren Zahnersatzteils bestimmt ist.

17. Beleuchtungsvorrichtung nach einem der vorhergehenden Ansprüche, **dadurch gekennzeichnet, dass** die Lichtquellen (14, 16) Abmessungen im Millimeterbereich aufweisen, insbesondere als LED-Chips (14, 16) mit etwa 1 x 1 Millimeter ausgebildet sind und für die Lichthärtung nahe an das Dentalrestaurationsteil herangeführt sind.

18. Beleuchtungsvorrichtung nach einem der vorhergehenden Ansprüche, **dadurch gekennzeichnet, dass** mindestens zwei Lichtquellen (14, 16) im Winkel zueinander so ausgerichtet sind, dass sie das zu härtende Dentalrestaurationsteil von zwei unterschiedlichen Winkeln beaufschlagen.

## Claims

1. A lighting apparatus, for dental purposes having
- a substrate (18) and
- a metallic reflection layer (29) mounted on the substrate (18),
- wherein a plurality of light sources (14, 16) on semiconductor basis is mounted on the metallic reflection layer, which light sources are encircled by a reflective surface on the metallic reflection layer,
**characterized by**
- at least two saw cuts (44, 46) dividing the metallic reflection layer (29) electrically into at least three different areas (398, 40), wherein
-- a first (14) of the light sources (14, 16) is electrically connected to a first area (38) of the metallic reflection layer (29),
-- a second (16) of the light sources (14, 16) is electrically connected to a last area (40) of the metallic reflection layer (29),
-- the light sources (14, 16) are at least disposed in one area of the metallic reflection layer (29) between the first area (38) and the last area (40), and
-- the light sources (14, 16) are electrically connected in series with each other.

2. A lighting apparatus according to claim 1, wherein the reflective surface is formed by a reflection layer, which is built upon the substrate.

3. A lighting apparatus according to claim 2, wherein a metallic reflection layer (29) is built upon the substrate (18).

4. A lighting apparatus according to any of the previous claims, wherein the reflective surface (29) has a degree of reflection of more than 50%, especially, of more than 60%.

5. A lighting apparatus according to any of the previous claims, wherein the reflective surface (29) is comprised of at least one of aluminum, silver, palladium, platinum, silicon and ceramic.

6. A lighting apparatus according to any of the previous claims, wherein the substrate (18) is provided with the reflective surface (29).

7. A lighting apparatus according to any of the previous claims, wherein each of the light sources (14, 16, 72) is surrounded by a reflection area (38, 40), which is formed by the reflection layer (29), and the reflection areas (38, 40) are in neighbouring disposition to one another.

8. A lighting apparatus according to any of the previous claims, wherein LED-chips (14, 16) are mounted on the substrate (18) either following the fabrication of the metallic reflection layer (29) or are mounted onto the metallic reflection layer (29).

9. A lighting apparatus according to any of the previous claims, wherein bonding wire (32, 34, 36, 74, 76) is disposed between the LED-chips (14, 16) and the areas of the reflection layer (29), and the areas of the reflection layer (29) are wired as connection lines (60, 62, 68, 70) to serve as the energy supply of the LED-chips (14, 16).

10. A lighting apparatus according to any of the previous claims, wherein LED-chips (14, 16) are arranged in neighboring and one over another disposition in a raster and wires (32, 34, 36, 74, 76) for the LED-chips (14, 16) as the light sources (14, 16) extend at least partially between the chips, and the wires are, especially, connected by bonding.

11. A lighting apparatus according to any of the previous claims, wherein the metallic reflection layer (29) is configured as a metallic layer and the substrate (18) is a silicon wafer and a diffusion-blocking layer (24, 26) separates the silicon wafer from the metallic layer.

12. A lighting apparatus according to claim 7, wherein a silicon oxide layer is formed on the silicon wafer and the diffusion-blocking layer (24, 26) extends over the silicon oxide layer.

13. A lighting apparatus according to any of the previous claims, wherein the light sources (14, 16) are configured as LED-chips (14, 16) and are disposed in a sunken manner in the substrate (18) and the reflection areas extend, as viewed from the LED-chips (14, 16) toward the front at an angle.

14. A lighting apparatus according to any of the previous claims, wherein the reflection areas are immediately bordering the LED-chips (14, 16) and extend at an angle toward the front, especially at an angle of approximately 56°, and the LED-chips (14, 16) are arranged in a dense arrangement surrounded by the reflection areas.

15. A lighting apparatus according to any of the previous claims, wherein the lighting apparatus (10) is deployed in a light hardening device as a light source and the emitted light beams are conductable, especially by a prismatic body, to a light guiding conduit.

16. A lighting apparatus according to any of the previous claims, wherein the lighting apparatus (10) is mounted on the head of a dental practice instrument and is configured for effecting the light polymerization of a light polymerizable dental restoration piece.

17. A lighting apparatus according to any of the previous claims, wherein the light sources (14, 16) have dimensions within the millimeter range and, especially are configured as LED-chips (14, 16) having dimensions of approximately 1 mm x 1 mm and are disposable proximate to a dental restoration piece for effecting the light hardening thereof.

18. A lighting apparatus according to any of the previous claims, wherein at least two light sources (14, 16) are disposed in an angular relationship to one another such that they irradiate a dental restoration piece which is to be hardened from two different angles.

## Revendications

1. Dispositif d'éclairage pour des applications en odontologie, comprenant
- un substrat (18) et
- une couche réfléchissante (29) métallique appliquée sur le substrat (18),
- sachant qu'une pluralité de sources de lumière (14, 16) à base de semi-conducteurs sont installées sur la couche réfléchissante (29) métallique, lesquelles sont entourées d'une surface réfléchissante sur la couche réfléchissante métallique,
**caractérisé par**
- au moins deux coupes effectuées à la scie (44, 46), qui divisent la couche réfléchissante (29) métallique de manière électrique en au moins trois zones (398, 40) différentes, sachant
-- qu'une première source de lumière (14) parmi les sources de lumière (14, 16) est reliée de manière électrique à une première zone (38) de la couche réfléchissante (29) métallique,
-- qu'une deuxième source de lumière (16) parmi les sources de lumière (14, 16) est reliée de manière électrique à une dernière zone (40) de la couche réfléchissante (29) métallique,
-- que les sources de lumière (14, 16) sont disposées dans au moins une zone de la couche réfléchissante (29) métallique entre la première zone (38) et la dernière zone (40), et
-- que les sources de lumière (14, 16) sont reliées entre elles en série de manière électrique.

2. Dispositif d'éclairage selon la revendication 1, **caractérisé en ce que** la surface réfléchissante est formée par une couche réfléchissante, qui est appliquée sur le substrat.

3. Dispositif d'éclairage selon la revendication 2, **caractérisé en ce qu'**une couche réfléchissante (29) métallique est appliquée sur le substrat (18).

4. Dispositif d'éclairage selon l'une quelconque des revendications précédentes, **caractérisé en ce que** la surface réfléchissante (29) présente un degré de réflexion supérieur à 50 %, en particulier supérieur à 60 %.

5. Dispositif d'éclairage selon l'une quelconque des revendications précédentes, **caractérisé en ce que** la surface réfléchissante (29) est constituée d'aluminium, d'argent, de palladium, de platine, de silicium et/ou de céramique.

6. Dispositif d'éclairage selon l'une quelconque des revendications précédentes, **caractérisé en ce que** le substrat (18) présente la surface réfléchissante (29).

7. Dispositif d'éclairage selon l'une quelconque des revendications précédentes, **caractérisé en ce que** les sources de lumière (14, 16, 72) sont entourées respectivement de zones réfléchissantes (38, 40), lesquelles sont formées par la couche réfléchissante (29), et **en ce que** les zones réfléchissantes (38, 40) sont adjacentes les unes aux autres.

8. Dispositif d'éclairage selon l'une quelconque des revendications précédentes, **caractérisé en ce que** des puces à LED (14, 16) sont installées sur le substrat (18) selon l'ordre de production après ou sur la couche réfléchissante (29) métallique.

9. Dispositif d'éclairage selon l'une quelconque des revendications précédentes, **caractérisé en ce que** sont disposés entre les puces à LED (14, 16) et des zones de la couche réfléchissante (29) des fils de liaison (32, 34, 36, 74, 76), et **en ce que** les zones de la couche réfléchissante (29) sont câblées en tant que lignes de raccordement (60, 62, 68, 70) pour l'alimentation en courant des puces à LED (14, 16).

10. Dispositif d'éclairage selon l'une quelconque des revendications précédentes, **caractérisé en ce que** des puces à LED (14, 16) sont disposées en réseau les unes à côté des autres ou les unes sur les autres, et **en ce que** des fils (32, 34, 36, 74, 76) pour les puces à LED (14, 16) s'étendent au moins en partie entre les puces en tant que sources de lumière (14, 16), et **en ce que** les fils sont en particulier connectés.

11. Dispositif d'éclairage selon l'une quelconque des revendications précédentes, **caractérisé en ce que** la couche réfléchissante (29) métallique se présente sous la forme d'une couche métallique, et **en ce que** le substrat (18) est une tranche de silicium, et **en ce qu'**une couche de barrage de diffusion (24, 26) sépare la tranche de silicium de la couche métallique.

12. Dispositif d'éclairage selon la revendication 7, **caractérisé en ce qu'**est appliquée sur la tranche de silicium une couche d'oxyde de silicium, sur laquelle s'étend la couche de barrage de diffusion (24, 26).

13. Dispositif d'éclairage selon l'une quelconque des revendications précédentes, **caractérisé en ce que** les sources de lumière (14, 16) se présentent sous la forme de puces à LED (14, 16) et sont appliquées de manière abaissée sur le substrat (18), et **en ce que** les zones réfléchissantes s'étendent, vu depuis les puces à LED (14, 16), de manière inclinée vers l'avant.

14. Dispositif d'éclairage selon l'une quelconque des revendications précédentes, **caractérisé en ce que** les zones réfléchissantes s'étendent de manière inclinée vers l'avant directement de manière adjacente aux puces à LED (14, 16), en particulier selon un angle d'environ 56°, et **en ce que** les puces à LED (14, 16) avec les zones réfléchissantes placées autour sont disposées en empilement extrêmement serré.

15. Dispositif d'éclairage selon l'une quelconque des revendications précédentes, **caractérisé en ce que** le dispositif d'éclairage (10) est utilisé comme unité de source de lumière dans un appareil de durcissement à la lumière, et **en ce que** le rayonnement lumineux émis, en particulier par l'intermédiaire d'un corps prismatique, peut être amené à une barre de guide d'ondes optiques.

16. Dispositif d'éclairage selon l'une quelconque des revendications précédentes, **caractérisé en ce que** le dispositif d'éclairage (10) est installé à la pointe d'un instrument médical dentaire et se destine à la photopolymérisation d'un élément de prothèse dentaire photopolymérisable.

17. Dispositif d'éclairage selon l'une quelconque des revendications précédentes, **caractérisé en ce que** les sources de lumière (14, 16) présentent des dimensions dans la plage du millimètre, en particulier se présentent sous la forme de puces à LED (14, 16) dont les dimensions sont à peu près 1 x 1 millimètre et sont approchées pour le durcissement à la lumière de la partie de restauration dentaire.

18. Dispositif d'éclairage selon l'une quelconque des revendications précédentes, **caractérisé en ce qu'**au moins deux sources de lumière (14, 16) sont orientées l'une par rapport à l'autre de manière à former un angle, de telle manière qu'elles sollicitent la partie de restauration dentaire à durcir depuis deux angles différents.
